Europäisches Patentamt

**European Patent Office**

**Office européen des brevets**

(19)

(11) Publication number: **0 045 158**
A1

# EUROPEAN PATENT APPLICATION

(21) Application number: **81303234.9**

(22) Date of filing: **14.07.81**

(51) Int. Cl.³: **A 23 L  1/04,** A 23 G  9/02,
A 23 C  13/14

(30) Priority: **17.07.80 US 169569**

(43) Date of publication of application: **03.02.82**
**Bulletin 82/5**

(84) Designated Contracting States: **DE FR GB**

(71) Applicant: **MERCK & CO. INC., 126, East Lincoln Avenue**
**P.O. Box 2000, Rahway, New Jersey 07065 (US)**

(72) Inventor: **Igoe, Robert S., 6729 Green Gables Avenue,**
**San Diego California 02120 (US)**

(74) Representative: **Crampton, Keith John Allen et al, D.**
**Young & Co. 10 Staple Inn, London WC1V 7RD (GB)**

(54) **Process for thickening and stabilizing oil in water emulsions containing milk solids and emulsion stabilizer for use therein.**

(57) An oil-in-water emulsion stabilizer comprises a blend of
27—90% guar, 8—66% algin, and 0.5—30% xanthan gum, the
amount of each being chosen to total 100% and the percent-
ages being by weight.

The stabilizer is used for thickening and stabilizing oil-in-
water emulsions containing milk solids. It is added, with agita-
tion, to the water at room temperature, or to the milk-solids-
containing water mix at 50°C, after which the milk solids not fat
(in the room-temperature water procedure), butter fat, and
other ingredients are added. The mix develops viscosity after
processing. resulting in a smooth-flowing thickened mix.

1

# PROCESS FOR THICKENING AND STABILIZING OIL IN WATER EMULSIONS CONTAINING MILK SOLIDS AND EMULSION STABILIZER FOR USE THEREIN

Blends of gums as stabilizers in milk systems have been described, see U.S. 3,996,389 (General Mills), teaching guar/xanthan gum mixtures. Alginates are widely used in edible liquid systems as thickening agents, see Whistler, Industrial Gums, pp. 56 - 59 (Academic Press, 1973).

Gums provide varying degrees of thickening and stability to food mixes. As the gum concentration increases to obtain greater thickening properties, processing conditions become more difficult. Thickened mixes do not readily flow through plate heat exchangers, etc., thereby increasing the opportunity for blown heat-exchanger gaskets, plate burn-on, or deterioration in flavor of the mix. Resulting mixes can have poor flavor release, as well as lacking smooth flow properties. Although lower gum levels can be used with gel-forming gums, the resulting mix will lack desired smooth-flowing properties and may also be clabbered or have chunky flow.

Thickened cream and recombined cream, a product formed by recombining water, butterfat, and milk solids, can be used as a topping for fruit, enchiladas, vegetables, and meat dishes where a thick consistency is desired for adherence to the product as well as for complementing mouthfeel. A frozen dessert mix in the liquid state requires thickening and stability ability to provide the desired properties of overrun, texture, body, and meltdown when later frozen.

The present invention provides a method of preparing an oil-in-water emulsion containing milk solids, in which the fat is used at 3-40% by weight of the total emulsion, which comprises adding while agitating about 0.2 to about 1.6%, by weight of the total emulsions, of a gum blend, each gum being added in amounts by weight, based on 100% gum blend, of 27-90% guar; 8-66% algin; and 0.5-30% xanthan gum; either (a) to water containing the milk solids at about 45°C or above, or (b) to water, followed by adding the milk solids and then heating to about 50°C; then adding the fat at about 50°C; followed by pasteurization, homogenization and cooling. Particularly preferred amounts of the gums used are 68.9-72.9% guar, 23.5-27.3% sodium alginate, and 3.4-4.1% xanthan gum; to total 100%.

This system is particularly useful in thickening and stabilizing oil-in-water emulsions containing "milk solids not fat" (MSNF), such as thickened cream, thickened recombined cream, frozen dessert mix and other emulsions containing water, oil, and milk solids not fat. It can provide a thickened, smooth flowing mix of comparably low viscosity during processing but that obtains its maximum viscosity after processing. This feature facilitates processing and reduces flavor damage while providing a thick emulsion of smooth flow, which is otherwise not obtainable using the individual gums or blends of two gums at comparable levels.

The gums are used in a dry blend, which is then added to the mix ingredients.

Once the gums have been blended, they are added to a water solution of MSNF at 50°C or above, or to water to which the MSNF are added after the gums are hydrated. The amount of the gum blend is about 0.2 to 1.6% by weight of the total emulsion, preferably 0.8-1.0% by weight for thickened cream and 0.3-0.7% for frozen dessert mix.

The MSNF are used in this product at levels of about 2-15%, and the fat (butter fat, vegetable fat, animal fat) is used at levels of about 3-40% by weight.

While the gum blend is added to the water or water/MSNF, the mixture is under agitation. "Agitation" includes the use of equipment such as food processors or food blenders, including large-scale equipment; the conditions are those normally employed to make up dairy-type emulsions.

While the system is being agitated, the fat is added. To facilitate emulsion formation, temperatures of both the aqueous system and the fat are at about 50°C. The mix is pasteurized, homogenized, and cooled. The differentiating features of this stabilizer blend is that total viscosity is not obtained until after cooling and aging; and the viscosity obtained is maximized while maintaining smooth flowing properties.

More details are given in the following examples, which are illustrative.

## EXAMPLE 1

### RECOMBINED CREAM

A blend of 72.5% guar, 25% high viscosity food grade sodium alginate and 3.75% xanthan gum was prepared. It was added to water while agitating and hydrated. Milk solids (MSNF) were then added, and the mixture heated to 50°C. The butter fat, previously heated at 50°C, and containing a small amount of a mono- and diglyceride emulsifier, was then added slowly, while agitation continued. The mixture was then pasteurized at 65°C for 30 minutes, homogenized at 13.8 MPa and cooled to 4-6°C.

The amounts used were :

| | |
|---|---|
| Water | 70.0% |
| Anhydrous butter oil | 21.0% |
| Milk solids not fat (MSNF) | 7.0% |
| Gum Blend | 0.8% |
| Mono- and diglyceride emulsifier | 0.4% |
| TOTAL | 99.2% |

The product was a recombined cream having a smooth body and a mayonnaise-type consistency and a cream-like taste.

## EXAMPLE 2

### FROZEN DESSERT FORMULATIONS

The same blend of gums as in Example 1 was evaluated in 6%, 8% and 13% butter-fat frozen-dessert formulations, having added sugar and emulsifier. After mixing generally as described in Example 1, viscosity measurements were taken, Brookfield Model RVT, No. 4 spindle, 10 rpm, 7°C.

FORMULA A  -  6% butter fat

5.5% MSNF

14% sugar

Results:  At 0.5% gum blend, 2200 mPa.s;  at 0.6% gum blend, 4000 mPa.s.

FORMULA B  -  8% butter fat

8% MSNF

12% sugar

Results:  At 0.3% gum blend, 1600 mPa.s;  at 0.35% gum blend, 2400 mPa.s;  at 0.55% gum blend, 4400 mPa.s.

FORMULA C  -  13% butter fat

4.5% MSNF

16% sugar

Results:  At 0.3% gum blend, 3300 mPa.s;  at 0.4% gum blend, 4800 mPa.s;  at 0.5% gum blend, 10,000 mPa.s;  at 0.6% gum blend, 13,600 mPa.s;  at 0.7% gum blend, 19,000 mPa.s.

An alternative method of preparation is to preheat the MSNF and water mix to 50°C and then add the gum blend, which will hydrate under continued normal processing conditions.

5

## CLAIMS

1.    A method of preparing an oil-in-water emulsion containing milk solids, in which the fat is used at 3-40% by weight of the total emulsion, which comprises adding while agitating about 0.2 to about 1.0%, by weight of the total emulsions, of a gum blend, each gum being added in amounts by weight, based on 100% gum blend, of 27-90%;  8-66% algin;  and 0.5-30% xanthan gum;  either (a) to water containing the milk solids at about 45°C or above, or (b) to water, followed by adding the milk solids and then heating to about 50°C;  then adding the fat at about 50°C;  followed by pasteurization, homogenization and cooling.

2.    A method as claimed in Claim 1 in which the amount of the gums is 0.3-1.0% by weight of the total emulsion.

3.    A method as claimed in Claim 2 in which the gum blend, based on 100% by weight gum, is 68.9-72.9% guar, 23.5-27.3% algin, and 3.4-4.1% xanthan gum.

4.    An oil-in-water emulsion stabilizer comprising a blend of 27-90% guar, 8.66% algin, and 0.5-30% xanthan gum, the amount of each being chosen to total 100% and the percentages being by weight.

5.    An oil-in-water emulsion stabilizer comprising a blend of 68.9-72.9% guar, 23.5-27.3% algin, and 3.4-4.1% xanthan gum, the amount of each being chosen to total 100% and the percentages being by weight.

European Patent Office

**EUROPEAN SEARCH REPORT**

0045158
Application number

EP 81 30 3234

| | DOCUMENTS CONSIDERED TO BE RELEVANT | | CLASSIFICATION OF THE APPLICATION (Int. Cl.³) |
|---|---|---|---|
| Category | Citation of document with indication, where appropriate, of relevant passages | Relevant to claim | |
| D | <u>US - A - 3 996 389</u> (J. OSBORNE)<br>* Claims 1,2,3,4; examples I,II; column 4, lines 1-17 *<br><br>-- | 1,2 | A 23 L 1/04<br>A 23 G 9/02<br>A 23 C 13/14 |
| | <u>US - A - 3 914 440</u> (R. WITZIG)<br>* Claim 1; column 2, line 54 - column 4, line 17 *<br><br>-- | 1,2 | |
| P | <u>GB - A - 2 039 712</u> (MERCK)<br>* Claims 1,3; examples 1-3 *<br><br>-- | 1,2 | **TECHNICAL FIELDS SEARCHED (Int. Cl.³)** |
| | <u>FR - A - 2 372 600</u> (MERCK)<br>* Claims 1-4; example 2; page 2, lines 25-30 *<br>& GB - A - 1 570 793<br><br>-- | 1,2 | A 23 L 1/04<br>A 23 G 9/02<br>A 23 C 13/12<br>A 23 C 13/14<br>A 23 L 1/19<br>A 23 C 9/154 |
| | THE AUSTRALIAN JOURNAL OF DAIRY TECHNOLOGY, vol. 34, no. 3, pages 112-113, September 1979, F. KIESEKER "Further developments in the manufacture of powdered whipping creams"<br>* Page 1, column 2 *<br><br>-- | 1,2 | |
| | THE AUSTRALIAN JOURNAL OF DAIRY TECHNOLOGY, vol. 34, no. 1, pages 21-24, 1979 F. KIESEKER "The manufacture of powdered whipping creams"<br>* Page 21; page 22, column 1, paragraph 2; page 22, column 2, paragraph 4 *<br><br>--  ./. | 1,2 | **CATEGORY OF CITED DOCUMENTS**<br><br>X: particularly relevant<br>A: technological background<br>O: non-written disclosure<br>P: intermediate document<br>T: theory or principle underlying the invention<br>E: conflicting application<br>D: document cited in the application<br>L: citation for other reasons<br><br>&: member of the same patent family, corresponding document |

The present search report has been drawn up for all claims

| Place of search | Date of completion of the search | Examiner |
|---|---|---|
| The Hague | 29-10-1981 | DESMEDT |

EPO Form 1503.1  06.78

# DOCUMENTS CONSIDERED TO BE RELEVANT

| Category | Citation of document with indication, where appropriate, of relevant passages | Relevant to claim |
|---|---|---|
| A | EP - A - 0 001 192 (CECA) | |
| A | FR - A - 2 362 893 (MERCK)<br>& US - A - 4 105 461 | |
| A | US - A - 4 178 390 (R. IGOE) | |
| A | US - A - 3 949 102 (J. HELLYER et al.) | |
| A | CHEMICAL ABSTRACTS, vol. 90, no. 1, January 1979, page 439, abstract 4573v Columbus, Ohio, US H.M. BAI et al. "A study on the development of the mixed stabilizer for ice cream manufacture"<br><br>& HANGUK CH'UKSAN HAKHOE CHI 1978, 20(5) 436-45. | |

-----

**CLASSIFICATION OF THE APPLICATION (Int. Cl.³)**

**TECHNICAL FIELDS SEARCHED (Int. Cl.³)**